**Europäisches Patentamt**

**European Patent Office**

**Office européen des brevets**

(19)

(11) **EP 1 551 015 A2**

(12) # EUROPEAN PATENT APPLICATION

(43) Date of publication:
**06.07.2005 Bulletin 2005/27**

(51) Int Cl.7: **G11B 7/135**

(21) Application number: **04030717.5**

(22) Date of filing: **23.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **05.01.2004 JP 2004000555**

(71) Applicant: **Funai Electric Co., Ltd.**
**Daito-shi, Osaka 574-0013 (JP)**

(72) Inventor: **Nagashima, Kenji**
**Daito-shi Osaka 574-0013 (JP)**

(74) Representative: **Grünecker, Kinkeldey,**
**Stockmair & Schwanhäusser Anwaltssozietät**
**Maximilianstrasse 58**
**80538 München (DE)**

(54) **Optical pick-up device capable of correcting spherical aberration**

(57) A mirror actuator (10) includes a piezoelectric element (21) bonded at a circular surface to a rear surface of a circular mirror (4) such that the circular surface's center matches that of the rear, circular surface of the mirror (4). The piezoelectric element (21) receives a potential to cause its bonded circular surface to expand/contract radially around 360 degrees by a uniform ratio to allow the mirror (4) to have a surface modified in geometry. The mirror (4) has a mirror surface provided with a transmission film (20) having an index of refraction of at least one.

## FIG.1

**Description**

BACKGROUND OF THE INVENTION

Field of the Invention

The present invention relates generally to optical pickup devices and particularly to optical pickup devices having a function correcting spherical aberration.

Description of the Background Art

Compact disks (CDs), digital versatile disks (DVD) and other similar optical disks have their stored information reproduced via apparatuses including an optical pickup device to optically read the information from the optical disks.

In an optical pickup device a source of light emits a laser beam of light which is in turn reflected by a mirror and gathered by an objective lens to illuminate an optical disk's recording surface on a desired track. The track reflects and thus returns the light which is in turn detected by a photodetector to read the track's information.

The light gathered by the objective lens can provide spherical aberration. Spherical aberration means that, of rays focused by the objective lens, a ray passing through a portion of the lens remote from the optical axis, or the lens's peripheral portion, and a ray passing close to the optical axis, or the lens's center, are focused at different locations. When spherical aberration is introduced, an optical disk cannot have its information satisfactorily reproduced.

Accordingly, the objective lens is designed to correct spherical aberration for a thickness of an optical disk predetermined. If the optical disk is not uniform in thickness, however, and an amount of correction does not match, spherical aberration is introduced. Furthermore, if the optical disk has a recording layer formed of multiple layers, and a jump is made to a different layer, an amount of correction does not match, and spherical aberration is introduced.

Such spherical aberration is prevented for example by a method employing a liquid crystal device to modulate a phase corresponding to the spherical aberration, as disclosed in Japanese Patent Laying-Open No. 2003-141771.

Using a liquid crystal device to provide phase modulation as described in the publication, however, requires an optical pickup device to have a complicated structure and also contributes to increased cost.

SUMMARY OF THE INVENTION

The present invention contemplates an optical pickup device that can have a simplified structure to reduce spherical aberration.

To overcome the above disadvantage, the present invention in one aspect provides an optical pickup device allowing a laser beam of light emitted from a source of a laser beam of light to be reflected by a mirror to provide a reflection of light which is in turn focused by an objective lens on an optical storage medium, the optical pickup device including: a circular mirror reflecting the laser beam of light; and a mirror actuator including a piezoelectric element having a circular surface bonded to a circular rear surface of the mirror such that the center of the circular surface of the piezoelectric element and that of the circular rear surface of the mirror match, the piezoelectric element receiving a potential to cause the circular surface bonded to the mirror to expand/contract radially around 360 degrees by a uniform ratio to allow the mirror to have a surface modified in geometry, the mirror having a mirror surface provided with a transmission film having an index of refraction of at least one.

The present invention in another aspect provides an optical pickup device allowing a laser beam of light emitted from a source of a laser beam of light to be reflected by a mirror to provide a reflection of light in turn focused by an objective lens on an optical storage medium, the optical pickup device including: a circular mirror reflecting the laser beam of light; a prism arranged opposite a mirror surface of the mirror; and a mirror actuator including a piezoelectric element having a circular surface bonded to a circular rear surface of the mirror such that the center of the circular surface of the piezoelectric element and that of the circular rear surface of the mirror match, the piezoelectric element receiving a potential to cause the circular surface bonded to the mirror to expand/contract radially around 360 degrees by a uniform ratio to allow the mirror to have a surface modified in geometry, and if a beam of light emitted from the source must be directed in a direction allowing an angle $\theta_4 + \theta_{12}$ relative to a direction of incidence of the beam to provide the beam to the objective lens, the prism and the mirror are inclined and the prism has an index of refraction and a geometry, set to establish $(\theta_4 + \theta_{12}) > (2 \times \theta_8)$, where $\theta_4$ represents an angle of incidence of light on a surface of the prism farther from the mirror surface of the mirror, $\theta_{12}$ represents an angle of refraction of light emanating from the surface of the prism farther from the mirror surface of the mirror, and $\theta_8$ represents an angle of incidence on the mirror of light emanating from a surface of the prism closer to the mirror surface of the mirror.

The present optical pickup device can have a simplified structure to reduce spherical aberration.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 shows a main portion of an optical system of an optical pickup device.

Fig. 2A shows an optical path of a reflection of light 12 provided when a turning/aberration correction mirror 4 has a mirror surface with a typical geometry and Fig. 2B shows an optical path of the reflection of light 12 provided when turning/aberration correction mirror 4 has its mirror surface modified in geometry.

Fig. 3 shows a structure of a mirror actuator 10 in a first embodiment.

Fig. 4 shows the mirror 4 mirror surface receiving a collimated beam of light 11 in the form of a spot.

Fig. 5A shows an optical path of the collimated beam of light 11 and the reflection of light 12 provided when mirror 4.has a mirror surface without a transmission film provided thereon, and Fig. 5B shows an optical path of the collimated beam of light 11 and the reflection of light 12 provided when mirror 4 has a mirror surface provided with a transmission film 20 having an index of refraction of 1.7.

Fig. 6 shows an arrangement of a prism 30 and mirror 4.

## DESCRIPTION OF THE PREFERRED EMBODIMENTS

Hereinafter the present invention in embodiments will be described with reference to the drawings.

First Embodiment

The present embodiment relates to an optical pickup device including a turning/aberration correction mirror provided with a transmission film.

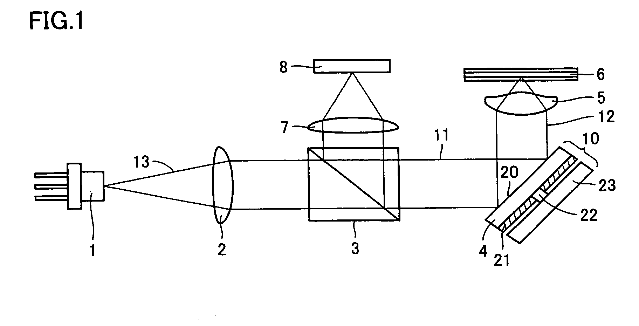

Fig. 1 shows a main portion of an optical system of the pickup device. With reference to the figure, the optical pickup device includes a source of light 1, a collimator 2, a polarizing beam splitter 3, a circular, turning/aberration correction mirror 4, an objective lens 5, a cylindrical lens 7, a photodetector 8, and a mirror actuator 10.

The source of light 1 emits a beam 13. Collimator 2 collimates beam 13 into a collimated beam of light 11. Mirror 4 turns the collimated beam of light 11 in a direction, i.e., reflects beam 11 toward an optical disk 6 to provide a reflection of light 12. Objective lens 5 allows the reflection of light 12 to illuminate optical disk 6 on an information recording surface.

The information recording surface has a bit train, which modulates the reflection of light in optical intensity. The reflection of light thus modulated then passes through objective lens 5 and is reflected by mirror 4 and then polarizing beam splitter 3 and converged by cylindrical lens 7 and thus input to photodetector 8.

Photodetector 8 receives the light, which is used to reproduce information of optical disk 6 and control objective lens 5 to focus and track appropriately.

Furthermore, a control circuit (not shown) separates the light incident on photodetector 8 into light of a center portion and that of a peripheral portion and detects their respective focus positions to detect an amount of spherical aberration. The control circuit is driven by the detected amount of spherical aberration to control mirror actuator 10, which supports mirror 4, to modify the mirror 4 mirror surface in geometry to reduce the amount of spherical aberration.

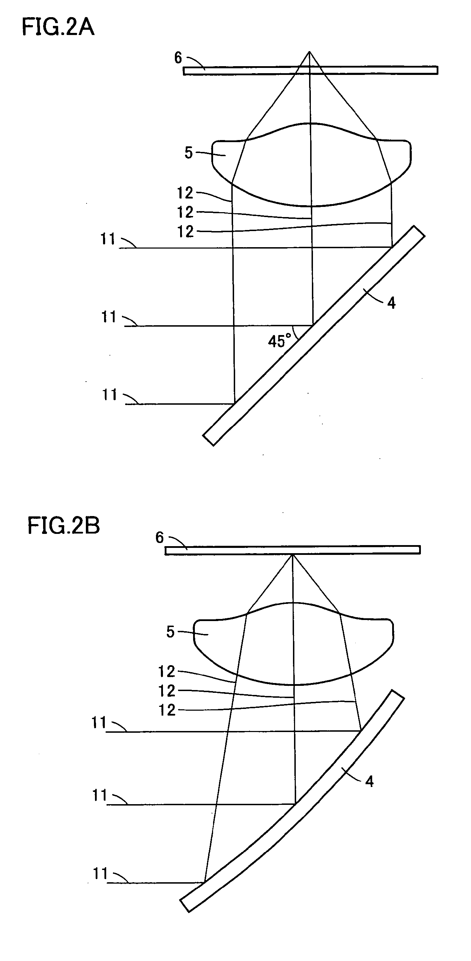

Fig. 2A shows an optical path of the reflection of light 12 provided when mirror 4 has a mirror surface with a typical or flat geometry. As shown in the figure, spherical aberration has been introduced.

Fig. 2B shows an optical path of the reflection of light 12 provided when mirror 4 has its mirror surface modified in geometry. As shown in the figure, the mirror surface is modified in geometry to reduce an amount of spherical aberration.

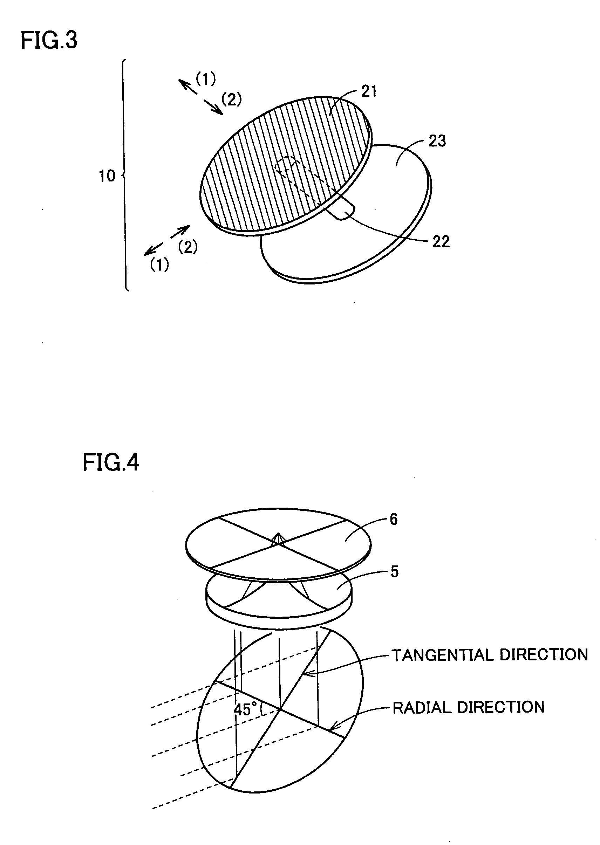

Fig. 3 shows a structure of mirror actuator 10. With reference to the figure, mirror actuator 10 includes a piezoelectric element 21, a branch 22 supporting piezoelectric element 21, and a fixture 23.

Piezoelectric element 21 is bonded on a rear surface of mirror 4. The surface of piezoelectric element 21 that is bonded to the rear surface of mirror 4 is a circle, and the circle's center matches that of the rear, circular surface of the mirror. Piezoelectric element 21 has its thickness in a direction perpendicular to the mirror surface.

When piezoelectric element 21 has potential applied thereon, piezoelectric element 21 expands/contracts. More specifically, when piezoelectric element 21 receives positive potential, piezoelectric element 21 has the circular surface bonded to mirror 4 expanding radially around 360 degrees by a uniform ratio, as indicated in Fig. 3 by an arrow (1). As mirror 4 is bonded to piezoelectric element 21, mirror 4 flexes to concave, and the reflection of light 12 is thus converged.

In contrast, when piezoelectric element 21 receives negative potential, then as indicated in Fig. 3 by an arrow (2), piezoelectric element 21 has the circular surface bonded to mirror 4 contracting radially around 360 degrees by a uniform ratio. As mirror 4 is bonded to piezoelectric element 21, mirror 4 flexes to protrude, and the reflection of light 12 is thus diverged.

As shown in Fig. 4, as a mirror angle of 45° is set, mirror 4 has a mirror surface receiving the collimated beam of light 11 in an elliptical spot. Herein a "mirror angle" refers to an angle of the collimated beam of light 11 incident on the mirror 4 mirror surface having a typical geometry.

In Fig. 4, a tangential direction is a direction parallel to the mirror surface of mirror 4 in normal condition and connecting locations on the mirror that receive rays of light closest to and remotest from the optical disk 6 surface. A radial direction is a direction parallel to the mirror surface of mirror 4 in normal condition and perpendicular to the tangential direction.

Thus for a mirror angle smaller than 90°, an elliptical spot is provided, and flexing mirror 4 in the tangential and radial directions by equal amounts, i.e., providing equal radii of curvature in the tangential and radial directions, does not provide an appropriately reduced amount of spherical aberration. In other words, however a potential to be applied may be adjusted, spherical aberration still remains in unnegligible amount.

In the present embodiment spherical aberration can appropriately be reduced in amount by allowing the turning/aberration correction mirror 4 mirror surface to receive the collimated beam of light 11 at an angle as close to a vertical angle as possible (i.e., at an angle allowing an incident angle to be close to 0°) by providing the mirror 4 mirror surface with a transmission film 20 having as high an index of refraction as possible of at least one.

Fig. 5A shows an optical path of the collimated beam of light 11 and the reflection of light 12 provided when mirror 4 has a mirror surface without a transmission film provided thereon. As shown in the figure, the collimated beam of light 11 is incident on the mirror surface at an angle of $\alpha$ ( = 45°).

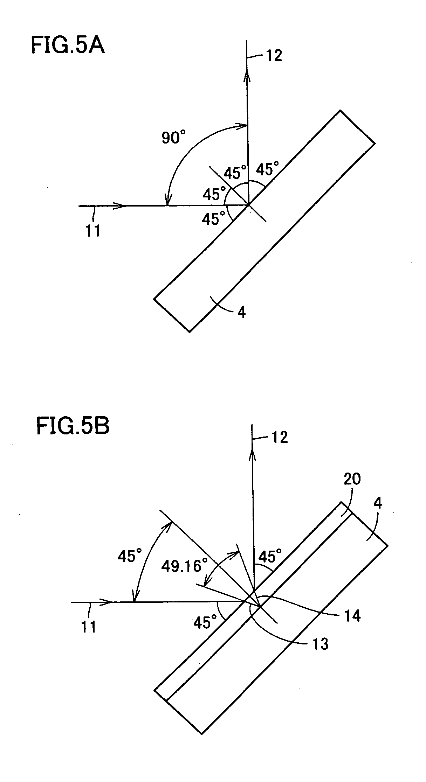

Fig. 5B shows an optical path of the collimated beam of light 11 and the reflection of light 12 provided when mirror 4 has a mirror surface provided with transmission film 20 having an index of refraction of 1.7. As shown in the figure, the collimated beam of light 11 is incident on a surface of transmission film 22 at angle $\alpha$ ( = 45°) and refracted through the same surface to provide a refraction of light 13. As transmission film 20 has an index of refraction of 1.7, in accordance with Snell's law an angle of refraction $\beta$ is 24.58° from an expression $\sin\alpha = 1.7 \times \sin\beta$. The refraction of light 13 is reflected by the mirror 4 mirror surface. The angles of incidence and reflection are $\beta$ ($< \alpha$). A reflection of light 14 is incident on the transmission film 20 surface at angle $\beta$ and refracted through the same surface to provide the reflection of light 12 which is in turn incident on objective lens 15. In accordance with Snell's law the angle of refraction is $\alpha$ ( = 45°).

The transmission film having an index of refraction of at least one that is provided on the mirror 4 mirror surface can provide a reduced angle of incidence of light on the mirror surface so that mirror 4 can receive light in a direction close to a perpendicular direction.

Thus the present embodiment provides an optical pickup device including turning/aberration correction mirror 4 having a mirror surface provided with a transmission film having an index of refraction of at least one so that if mirror 4 deformed to correct spherical aberration has a mirror surface with equal radii of curvature in the tangential and radial directions, an appropriately reduced amount of spherical aberration can be achieved.

Second Embodiment

The present embodiment relates to an optical pickup device including a prism arranged opposite a mirror surface of a turning/aberration correction mirror.

The present embodiment's optical pickup device differs from the first embodiment's optical pickup device shown in Fig. 1 in that turning/aberration correction mirror 4 does not have a mirror surface provided with transmission film 20 but rather has a mirror surface opposite a prism 30.

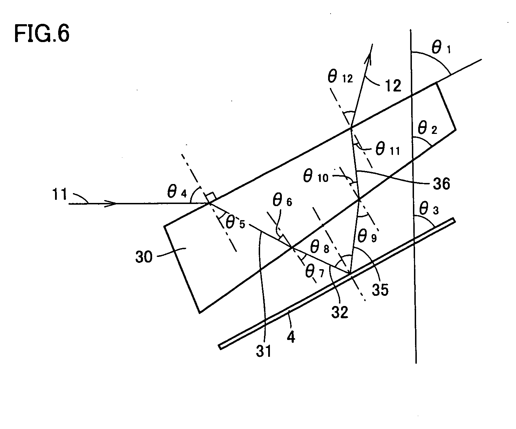

Fig. 6 shows an arrangement of prism 30 and mirror 4. With reference to the figure, prism 30 is formed of BK7 and has an index of refraction $n_1$, and is arranged opposite the mirror 4 surface (or mirror surface).

As shown in the figure, the prism 30 front and rear surfaces and the mirror 4 mirror surface form angles $\theta_1$, $\theta_2$ and $\theta_3$, respectively, relative to a direction perpendicular to the collimated beam of light 11 for the sake of illustration. Furthermore, the angle formed by the collimated beam of light 11 and the reflection of light 12 is not limited to 90° for the sake of illustration.

The collimated beam of light 11 is incident on the prism 30 front surface at an angle of incidence $\theta_4$ and refracted through the same front surface to provide a refraction of light 31 of an angle of refraction $\theta_5$. Therefore the following expression:

$$\theta_5 = \sin^{-1}(\sin\theta_4/n_1) \qquad (A1)$$

is established.

Furthermore, the refraction of light 31 is incident on the prism 30 rear surface at an angle of incidence $\theta_6$ and refracted through the same rear surface to provide a refraction of light 32 of an angle of refraction of $\theta_7$. Therefore the following expressions:

$$\theta_6 = \theta_5 + (\theta_2 - \theta_1) \qquad (A2)$$

$$\theta_7 = \sin^{-1}(n_1 \times \sin\theta_6) \qquad (A3)$$

are established.

The refraction of light 32 is reflected by the mirror 4 mirror surface to provide a reflection of light 35. The angles of incidence and reflection are an angle $\theta_8$. Therefore the following expression:

$$\theta_8 = \theta_7 + (\theta_3 - \theta_2) \qquad (A4)$$

is established.

The reflection of light 35 is incident on the prism 30 rear surface at an angle of incidence $\theta_9$ and refracted through the same rear surface to provide a refraction of light 36 of an angle of refraction $\theta_{10}$. Therefore the following expressions:

$$\theta_9 = \theta_8 + (\theta_3 - \theta_2) = \theta_7 + 2 \times (\theta_3 - \theta_2) \quad (A5)$$

$$\theta_{10} = \sin^{-1}(\sin\theta_9/n_1) \quad (A6)$$

are established.

The refraction of light 36 is incident on the prism 30 front surface at an angle of incidence $\theta_{11}$ and refracted through the same rear surface to provide the reflection of light 12 of an angle of refraction $\theta_{12}$, which is incident on objective lens 5. Therefore the following expressions:

$$\theta_{11} = \theta_{10} + (\theta_2 - \theta_1) \quad (A7)$$

$$\theta_{12} = \sin^{-1}(n1 \times \sin\theta_{11}) \quad (A8)$$

are established.

If the reflection of light 12 and the collimated beam of light 11 form an angle $\theta_{13}$, then the following expression:

$$\theta_{13} = \theta_4 + \theta_{12} \quad (A9)$$

is established.

Thus when the prism 30 front and rear surfaces and the mirror 4 mirror surface form angles $\theta_1$, $\theta_2$ and $\theta_3$, respectively, relative to a direction perpendicular to the collimated beam of light 11 and a relationship $(\theta_4 + \theta_{12}) > (2 \times \theta_8)$ is also established, a smaller angle of incidence on mirror 4 is provided than when prism 30 is absent and mirror 4 is arranged with an inclination allowing the collimated beam of light 11 to be incident at an angle of incidence of $(\theta_4 + \theta_{12})/2$.

In other words, if the collimated beam of light 11 must be directed in a direction allowing an angle of $(\theta_4 + \theta_{12})$ relative to a direction of incidence of the collimated beam of light 11 to provide the collimated beam of light 11 to objective lens 5, setting an inclination of prism 30 (associated with $\theta_1$ and $\theta_2$), that of turning/aberration correction mirror 4 (associated with $\theta_3$), and the prism 30 index of refraction $(n_1)$ and geometry (associated with $\theta_1$ and $\theta_2$) as appropriate so that the prism 30 front and rear surfaces receives and emanates light at the angles of incidence $\theta_4$ and refraction $\theta_{12}$, respectively, and the relationship $(\theta_4 + \theta_{12}) > (2 \times \theta_8)$ is also satisfied, allows a smaller angle of incidence on mirror 4 than when prism 30 is absent.

Thus the present embodiment provides an optical pickup device including turning/aberration correction mirror 4 having a mirror surface opposite prism 30 having an appropriate index of refraction and an appropriate geometry and positioned as appropriate so that if mirror 4 deformed to correct spherical aberration has a mirror surface with a uniform radius of curvature in its tangential and radial directions, an appropriately reduced amount of spherical aberration can still be achieved.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.  An optical pickup device allowing a laser beam of light (13) emitted from a source of a laser beam of light (1) to be reflected by a mirror (4) to provide a reflection of light (12) in turn focused by an objective lens (5) on an optical storage medium (6), comprising:

    a circular mirror (4) reflecting the laser beam of light (13); and
    a mirror actuator (10) including a piezoelectric element (21) having a circular surface bonded to a circular rear surface of said mirror (4) such that a center of said circular surface of said piezoelectric element and that of said circular rear surface of said mirror (4) match, said piezoelectric element (21) receiving a potential to cause said circular surface bonded to said mirror to expand/contract radially around 360 degrees by a uniform ratio to allow said mirror (4) to have a surface modified in geometry, said mirror (4) having a mirror surface provided with a transmission film (20) having an index of refraction of at least one.

2.  An optical pickup device allowing a laser beam of light (13) emitted from a source of a laser beam of light (1) to be reflected by a mirror (4) to provide a reflection of light (12) in turn focused by an objective lens (5) on an optical storage medium (6), comprising:

    a circular mirror (4) reflecting said laser beam of light (13);
    a prism (3) arranged opposite a mirror surface of said mirror (4); and
    a mirror actuator (10) including a piezoelectric element (21) having a circular surface bonded to a circular rear surface of said mirror (4) such that a center of said circular surface of said piezoelectric element and that of said circular rear surface of said mirror (4) match, said piezoelectric element (21) receiving a potential to cause said circular surface bonded to said mirror to expand/contract radially around 360 degrees by a uniform ratio to allow said mirror (4) to have a surface modified in geometry, if a beam of light emitted from said source (1) must be directed in a direction allowing an angle $\theta_4$ + $\theta_{12}$ relative to a direction of incidence of said beam to provide said beam to said objective lens (5), said prism (30) and said mirror (4) being inclined and said prism (30) having an index of refraction and a geometry, set to establish $(\theta_4 + \theta_{12}) > (2 \times \theta_8)$, where $\theta_4$ represents an angle of incidence of light on a surface of said prism (30) farther from said mirror surface of said mirror (4), $\theta_{12}$ represents an angle of refraction of light emanating from said surface of said prism (30) farther from said mirror surface of said mirror (4), and $\theta_8$ represents an angle of incidence on said mirror (4) of light emanating from a surface of said prism (30) closer to said mirror surface of said mirror (4).

FIG.1

FIG.2A

FIG.2B

FIG.3

FIG.4

TANGENTIAL DIRECTION

RADIAL DIRECTION

45°

FIG.5A

90°

45° 45°

45°

45°

12

11

4

FIG.5B

45°

49.16°

45°

45°

12

20

4

11

14

13

**FIG.6**